# EUROPÄISCHE PATENTSCHRIFT

(11) **EP 1 205 429 B1**
(45) Veröffentlichungstag und Bekanntmachung des Hinweises auf die Patenterteilung: **23.03.2005**
(21) Anmeldenummer: 01125723.5
(22) Anmeldetag: 27.10.2001
(51) Int. Cl.: B66F 9/20, B66F 9/075, B62D 51/04

(54) **Flurförderzeugflotte und Verfahren zum Herstellen der Flurförderzeugflotte**
Fleet of fork lift trucks and method for production thereof
Flotte de chariots élévateurs à fourche et procédé de production de celle-ci

(30) Priorität: 08.11.2000 DE 10055305
(43) Veröffentlichungstag der Anmeldung: 15.05.2002
(73) Patentinhaber: STILL WAGNER GmbH & Co KG, 72766 Reutlingen-Mittelstadt (DE)
(72) Erfinder: Marquart, Jürgen, Dipl.-Ing., 75331 Engelsbrand (DE)
(74) Vertreter: Lang, Michael

(56) Entgegenhaltungen:
- WO-A-99/10271
- DE-A- 2 319 618
- DE-A- 19 541 677
- DE-A- 19 732 888
- DE-A- 19 732 890
- US-A- 5 520 258

## Beschreibung

Die Erfindung betrifft eine Flurförderzeugflotte mit einem Mitgängerhubwagen und einem Mitfahrerhubwagen, vorzugsweise Fahrersitz- oder Fahrerstandhubwagen, wobei der Mitgängerhubwagen eine Lenkdeichsel mit verschiedenen Bedienelementen und den Bedienelementen zugeordneten Signalgebem aufweist, welche zumindest teilweise auf einem gemeinsamen Trägerbauteil angeordnet sind, und wobei der Mitfahrerhubwagen eine in einen Deckel eines Batteriefachs integrierte Bedienanordnung mit verschiedenen Bedienelementen und den Bedienelementen zugeordneten Signalgebern aufweist, welche ebenfalls zumindest teilweise auf einem gemeinsamen Trägerbauteil angeordnet sind.

Ebenfalls betrifft die Erfindung ein Verfahren zum Herstellen einer Flurförderzeugflotte mit einem Mitgängerhubwagen und einem Mitfahrerhubwagen, vorzugsweise Fahrersitz- oder Fahrerstandhubwagen, wobei der Mitgängerhubwagen eine Lenkdeichsel mit verschiedenen Bedienelementen und den Bedienelementen zugeordneten Signalgebern aufweist, welche zumindest teilweise auf einem gemeinsamen Trägerbauteil angeordnet sind, und wobei der Mitfahrerhubwagen eine in einen Deckel eines Batteriefachs integrierte Bedienanordnung mit verschiedenen Bedienelementen und den Bedienelementen zugeordneten Signalgebern aufweist, welche ebenfalls zumindest teilweise auf einem gemeinsamen Trägerbauteil angeordnet sind.

Das Produktprogramm von Flurförderzeugherstellem - im Folgenden Flurförderzeugflotte genannt - umfasst in der Regel eine Reihe von unterschiedlichen Flurförderzeugtypen, die sich hinsichtlich ihrer Einsatzart unterscheiden. Für den Einsatz in kleineren Lagerhallen und Supermärkten sind beispielsweise deichselgeführte Niederhubwagen und Hochhubwagen bekannt, die als Mitgängerhubwagen betrieben werden. Die Bedienperson geht dabei neben dem Flurförderzeug her und steuert dieses über eine Lenkdeichsel und die daran angeordneten Bedienelemente. Ein Deichselkopf für einen Mitgängerhubwagen dieser Art ist beispielsweise in der DE 197 32 890 A1 offenbart.

Für die Verwendung in größeren Lagerhallen sind Fahrersitz- und Fahrerstandhubwagen bekannt, die als Mitfahrerhubwagen betrieben werden. Je nach Gestaltung des Fahrerplatzes ist für die Bedienperson ein Standplatz oder ein Sitzplatz vorgesehen. Die Bedienelemente von Mitfahrerhubwagen sind direkt oder indirekt an einem Fahrzeugrahmen befestigt und in räumlicher Trennung zu einem Lenkrad angeordnet. Die Bedienanordnung ist auf dem seitlich neben dem Fahrer befindlichen Batteriefach derart angeordnet, dass sie für die Bedienperson vorzugsweise mit der rechten Hand erreichbar ist. Ein Schubmaststapler mit einer in einen Deckel eines Batteriefachs integrierten Bedienanordnung ist aus der US 5 520 258 A bekannt.

Die DE 23 19 618 A offenbart einen Deichselhubwagen, der wahlweise als Mitgängerhubwagen oder als Fahrerstandhubwagen betrieben werden kann, wobei die Bedienperson den Hubwagen unabhängig von der Betriebsart stets mit derselben Deichsel steuert.

Im Vergleich zu Mitgängerhubwagen können mit Mitfahrerhubwagen höhere Fahrgeschwindigkeiten erreicht werden. Hinsichtlich der Ausgestaltung und der Funktionen der Hubvorrichtung und des Fahrantriebs bestehen zwischen Mitgängerhubwagen und Mitfahrerhubwagen jedoch keine wesentlichen Unterschiede. Bei Mitgängerhubwagen und bei Mitfahrerhubwagen ist es bekannt, Bedienelemente für die verschieden Funktionen an Trägerbauteilen zu befestigen und gemeinsam mit dem Trägerbauteil im Flurförderzeug zu montieren. Die äußere Gestalt und räumliche Anordnung der Bedienelemente unterscheidet sich bei bekannten Flurförderzeugflotten jedoch erheblich zwischen Mitgänger- und Mitfahrerhubwagen.

Der Erfindung liegt die Aufgabe zugrunde, eine mit geringem Aufwand herstellbare Flurförderzeugflotte und ein wenig aufwändiges Verfahren zum Herstellen einer Flurförderzeugflotte zur Verfügung zu stellen.

Diese Aufgabe wird bezüglich der Flurförderzeugflotte dadurch gelöst, dass die Lenkdeichsel des Mitgängerhubwagens und die Bedienanordnung des Mitfahrerhubwagens gleiche Trägerbauteile aufweisen. Die Trägerbauteile können dabei ohne bauliche Anpassung in Mitgängerhubwagen oder in Mitfahrerhubwagen eingebaut werden. Hieraus ergeben sich erhebliche produktionstechnische und logistische Vorteile, da die Trägerbauteile in größerer Stückzahl hergestellt werden können und gleichzeitig die Teilevielfalt reduziert wird.

Gemäß einer vorteilhaften Weiterbildung der Erfindung sind die Trägerbauteile von elektrischen Platinen gebildet. Die Signalgeber der Bedienelemente, die beispielsweise von Mikroschaltern, Potentiometern oder Folienschaltern gebildet sein können, sind hierbei auf einer gemeinsamen Platine angeordnet, welche neben der Funktion als mechanisches Trägerbauteil auch eine Auswerteelektronik für die mit den Signalgebern erzeugten Signale aufweist. Eine derartige Anordnung ist für die Lenkdeichsel eines Mitgängerhubwagens beispielsweise aus der DE 197 32 890 A1 bekannt. Erfindungsgemäß wird diese Platine nun auch in Mitfahrerhubwagen eingesetzt.

Weitere Vorteile ergeben sich, wenn die Lenkdeichsel des Mitgängerhubwagens und die Bedienanordnung des Mitfahrerhubwagens gleiche Signalgeber aufweisen. Es kann hierbei eine Version der Platine für Flurförderzeug mit Hubgerüst und eine weitere Version für Flurförderzeuge ohne Hubgerüst vorgesehen werden, die jeweils in entsprechenden Mitgängerhubwagen oder Mitfahrerhubwagen eingesetzt werden können. Die gesamte Platine, einschließlich der darauf angeordneten Signalgeber und Bauelemente, kann somit unverändert in Mitgängerhubwagen oder Mitfahrerhubwagen verwendet werden.

Weitere Vorteile ergeben sich, wenn bei dieser Anordnung der Deckel der des Batteriefachs einen Handgriff aufweist. Die Bedienperson kann sich an dem Handgriff festhalten und gleichzeitig mit den Fingern der selben Hand die wichtigsten Bedienelemente der Bedienanordnung betätigen. Dies entspricht einer Anordnung, wie sie auch bei dem ebenfalls einen Handgriff aufweisenden Deichselkopf von Mitgängerhubwagen bekannt ist.

Die Bedienperson kann das Gewicht des den Handgriff greifenden Arms abstützen, wenn der Deckel eine Auflagefläche für einen Arm der Bedienperson aufweist.

Ergonomisch vorteilhaft ist es dabei, wenn mindestens ein Bedienelement gegenüber der Auflagefläche erhöht angeordnet ist. Der Deckel des Batteriefachs ist so geformt, dass die an dem Deckel befestigten Bedienelemente hinsichtlich ihrer Lage und Ausrichtung gut erreichbar und betätigbar sind.

Besondere Vorteile ergeben sich, wenn mindestens ein Bedienelement mit den Fingern einer den Handgriff umgreifenden Hand erreichbar ist. Die Bedienperson kann sich während der Bedienung des Flurförderzeugs jederzeit am Handgriff festhalten.

Bezüglich des Verfahrens zum Herstellen einer Flurförderzeugflotte wird die obengenannte Aufgabe ebenfalls dadurch gelöst, dass die Lenkdeichsel des Mitgängerhubwagens und die Bedienanordnung des Mitfahrerhubwagens mit gleichen Trägerbauteilen ausgerüstet werden. Vorteilhafterweise sind die Trägerbauteile von elektrischen Platinen gebildet. Zweckmäßig ist es ebenfalls, wenn die Lenkdeichsel des Mitgängerhubwagens und die Bedienanordnung des Mitfahrerhubwagens mit gleichen Signalgebern ausgerüstet werden.

Weitere Vorteile und Einzelheiten der Erfindung werden anhand des in den schematischen Figuren dargestellten Ausführungsbeispiels näher erläutert. Dabei zeigt
- Figur 1: einen Deichselkopf eines Mitgängerhubwagens in Draufsicht,
- Figur 2: einen Querschnitt durch einen Deichselkopf,
- Figur 3: eine Bedienanordnung eines Mitfahrerhubwagens in Draufsicht.

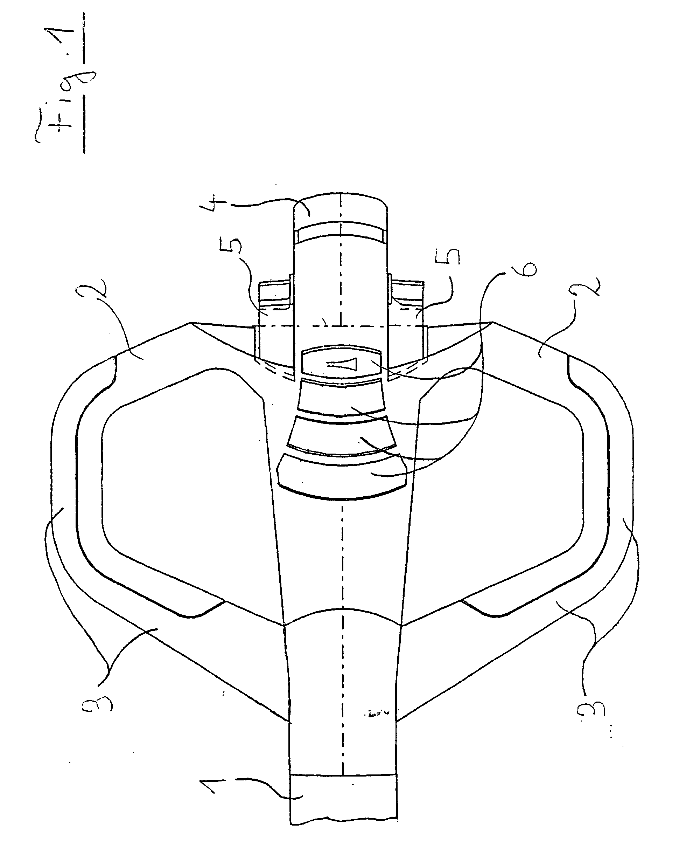

Figur 1 zeigt einen Deichselkopf eines Mitgängerhubwagens in Draufsicht. Zu erkennen ist eine Deichselstange 1, die den Deichselkopf mit einem nicht dargestellten Antriebsteil des Mitgängerhubwagens verbindet. Der Deichselkopf weist zwei Handgriffe 2 auf, an denen die Bedienperson den Deichselkopf wahlweise mit der rechten oder mit der linken Hand halten kann. Die Handgriffe 2 gehen in jeweils einen Schutzbügel 3 über, mit denen die den Handgriff greifende Hand vor Stößen und Einklemmen geschützt wird. Weiterhin ist ein Sicherheitsschalter 4 vorgesehen, der bei einem starken Anstoßen mit dem Deichselkopf an den Körper der Bedienperson automatisch betätigt wird und entsprechende Sicherheitsmaßnahmen auslöst.

Zur Steuerung des Fahrantriebs des Mitgängerhubwagens sind Drehschalter 5 vorgesehen, die mit dem Daumen einer einen Handgriff umgreifenden Hand betätigt werden können. Als Tastschalter 6 ausgebildete Bedienelemente können mit dem Zeigefinger einer einen Handgriff greifenden Hand erreicht und gedrückt werden. Diese ergonomisch günstige Anordnung der Bedienelemente des Deichselkopfs ist in der DE 196 01 694 A1 näher erläutert.

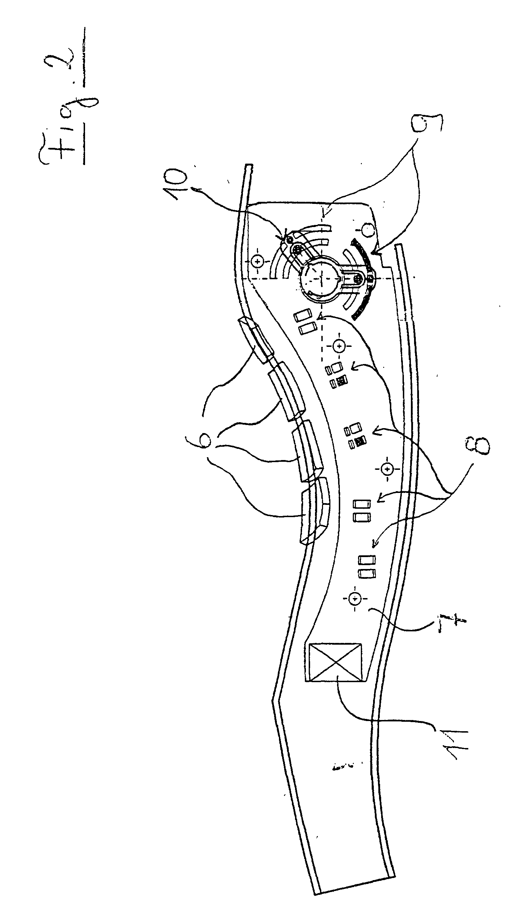

Figur 2 zeigt einen Querschnitt durch den Deichselkopf gemäß Figur 1. Im Inneren des Deichselkopfs ist eine Platine 7 angeordnet, die ein Trägerbauteil für die mit den Bedienelementen verbundenen Signalgeber bildet. Als Signalgeber sind Folienschalter 8 vorgesehen, die mit den auf der Oberseite des Deichselkopfs angeordneten Tastschaltem 6 in Verbindung stehen. Weiterhin ist auf der Platine 7 ein redundant ausgeführtes Folienpotentiometer 9 angeordnet, das über ein drehbares Zwischenstück 10 durch die Drehschalter (Fig. 1, Pos. 5) betätigbar ist. Die mit den Folienschaltern 8 und dem Folienpotentiometer 9 erzeugten elektrischen Signale werden über eine Schnittstelle 11 zu einer Steuereinheit des Flurförderzeugs übertragen. Die Anordnung und Ausbildung der Signalgeber des Deichselkopfs ist in der Druckschrift DE 197 32 890 A1 detailliert beschrieben.

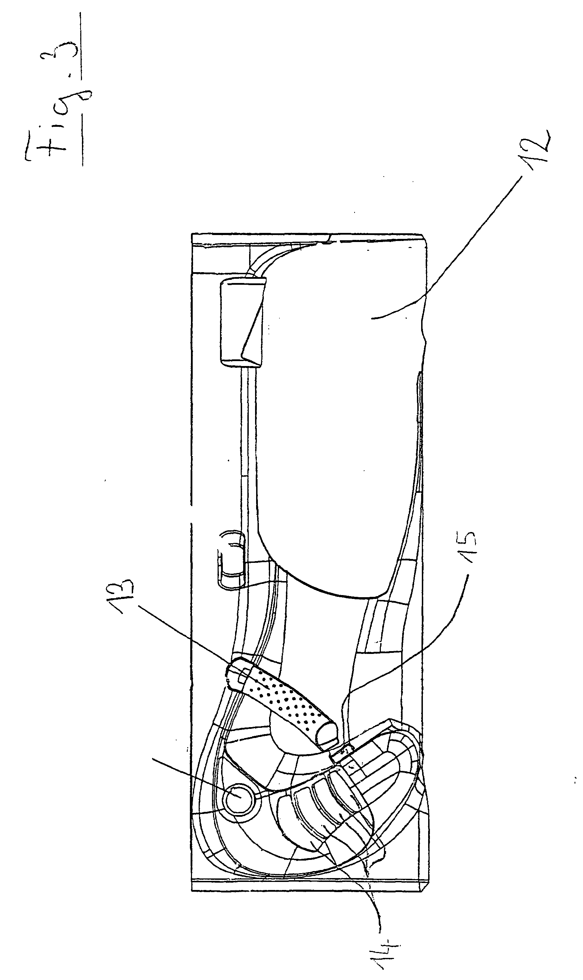

Figur 3 zeigt in Draufsicht einen Deckel eines Batteriefachs eines Mitfahrerhubwagens, auf dem sich die Bedienanordnung befindet. Die Bedienperson steht oder sitzt neben dem Batteriefach, so dass sie den rechten Unterarm auf einer Auflagefläche 12 abstützen kann, während sie einen Handgriff 13 greift. Die von Tastschaltern 14 gebildeten Bedienelemente können mit dem Zeigefinger der den Handgriff 13 greifenden Hand betätigt werden. Ein Drehschalter 15 kann mit dem Daumen der den Handgriff 13 greifenden Hand betätigt werden kann.

Wie zu erkennen ist, entspricht die Anordnung der Tastschalter 14 und des Drehschalters 15 für den Mitfahrerhubwagen gemäß Fig. 3 exakt der Anordnung der Tastschalter 6 und des Drehschalters 5 für den Mitgängerhubwagen gemäß Fig. 1. Da den Tastschaltem 6, 14 sowie den Drehschaltem 5, 15 jeweils die gleichen Funktionen - z.B. Hupen, Heben, Senken, Vorwärtsfahrt usw. - zugeordnet sind, können für Mitfahrerhubwagen und Mitgängerhubwagen die selben Platinen mit den selben Folienschaltern 8 und Folienpotentiometem 9 (Fig. 2, Pos. 7) verwendet werden.

## Patentansprüche

1. Flurförderzeugflotte mit einem Mitgängerhubwagen und einem Mitfahrerhubwagen, vorzugsweise Fahrersitz- oder Fahrerstandhubwagen, wobei der Mitgängerhubwagen eine Lenkdeichsel mit verschiedenen Bedienelementen und den Bedienelementen zugeordneten Signalgebern aufweist, welche zumindest teilweise auf einem gemeinsamen Trägerbauteil angeordnet sind, und wobei der Mitfahrerhubwagen eine in einen Deckel eines Batteriefachs integrierte Bedienanordnung mit verschiedenen Bedienelementen und den Bedienelementen zugeordneten Signalgebern aufweist, welche ebenfalls zumindest teilweise auf einem gemeinsamen Trägerbauteil angeordnet sind, **dadurch gekennzeichnet, dass** die Lenkdeichsel des Mitgängerhubwagens und die Bedienanordnung des Mitfahrerhubwagens gleiche Trägerbauteile aufweisen.

2. Flurförderzeugflotte nach Anspruch 1, **dadurch gekennzeichnet, dass** die Trägerbauteile von elektrischen Platinen (7) gebildet sind.

3. Flurförderzeugflotte nach Anspruch 1 oder 2, **dadurch gekennzeichnet, dass** die Lenkdeichsel des Mitgängerhubwagens und die Bedienanordnung des Mitfahrerhubwagens gleiche Signalgeber aufweisen.

4. Flurförderzeugflotte nach einem der Ansprüche 1 bis 3, **dadurch gekennzeichnet, dass** der Deckel des Batteriefachs einen Handgriff (13) aufweist.

5. Flurförderzeugflotte nach einem der Ansprüche 1 bis 4, **dadurch gekennzeichnet, dass** der Deckel eine Auflagefläche (12) für einen Arm der Bedienperson aufweist.

6. Flurförderzeugflotte nach Anspruch 5, **dadurch gekennzeichnet, dass** mindestens ein Bedienelement gegenüber der Auflagefläche (12) erhöht angeordnet ist.

7. Flurförderzeugflotte nach einem der Ansprüche 4 bis 6, **dadurch gekennzeichnet, dass** mindestens ein Bedienelement mit den Fingern einer den Handgriff (13) umgreifenden Hand erreichbar ist.

8. Verfahren zum Herstellen einer Flurförderzeugflotte mit einem Mitgängerhubwagen und einem Mitfahrerhubwagen, vorzugsweise Fahrersitzoder Fahrerstandhubwagen, wobei der Mitgängerhubwagen eine Lenkdeichsel mit verschiedenen Bedienelementen und den Bedienelementen zugeordneten Signalgebern aufweist, welche zumindest teilweise auf einem gemeinsamen Trägerbauteil angeordnet sind, und wobei der Mitfahrerhubwagen eine in einen Deckel eines Batteriefachs integrierte Bedienanordnung mit verschiedenen Bedienelementen und den Bedienelementen zugeordneten Signalgebern aufweist, welche ebenfalls zumindest teilweise auf einem gemeinsamen Trägerbauteil angeordnet sind, **dadurch gekennzeichnet, dass** die Lenkdeichsel des Mitgängerhubwagens und die Bedienanordnung des Mitfahrerhubwagens mit gleichen Trägerbauteilen ausgerüstet werden.

9. Verfahren nach Anspruch 8, **dadurch gekennzeichnet, dass** die Trägerbauteile von einer elektrischen Platinen (7) gebildet sind.

10. Verfahren nach Anspruch 8 oder 9, **dadurch gekennzeichnet, dass** die Lenkdeichsel des Mitgängerhubwagens und die Bedienanordnung des Mitfahrerhubwagens mit gleichen Signalgebem ausgerüstet werden.

## Claims

1. Fleet of fork lift trucks having a pedestrian-controlled lift truck and a driver-controlled lift truck, preferably a driver's-seat lift truck or a driver's-platform lift truck, the pedestrian-controlled lift truck having a steering bar having various operating elements and signal generators assigned to the operating elements, which are arranged at least to some extent on a common supporting component, and the driver-controlled lift truck having an operating arrangement integrated into a cover of a battery compartment and having various operating elements and signal generators assigned to the operating elements, which are likewise arranged at least to some extent on a common supporting component, **characterized in that** the steering bar of the pedestrian-controlled lift truck and the operating arrangement of the driver-controlled lift truck have the same supporting components.

2. Fleet of fork lift trucks according to Claim 1, **characterized in that** the supporting components are formed by electric circuit boards (7).

3. Fleet of fork lift trucks according to Claim 1 or 2, **characterized in that** the steering bar of the pedestrian-controlled lift truck and the operating arrangement of the driver-controlled lift truck have the same signal generators.

4. Fleet of fork lift trucks according to one of Claims 1 to 3, **characterized in that** the cover of the battery compartment has a handle (13).

5. Fleet of fork lift trucks according to one of Claims 1 to 4, **characterized in that** the cover has a supporting surface (12) for an arm of the operator.

6. Fleet of fork lift trucks according to Claim 5, **characterized in that** at least one operating element is arranged to be elevated with respect to the supporting surface (12).

7. Fleet of fork lift trucks according to one of Claims 4 to 6, **characterized in that** at least one operating element can be reached with the fingers of a hand gripping the handle (13).

8. Method for production of a fleet of fork lift trucks having a pedestrian-controlled lift truck and a driver-controlled lift truck, preferably a driver's-seat lift truck or a driver's-platform lift truck, the pedestrian-controlled lift truck having a steering bar having various operating elements and signal generators assigned to the operating elements, which are arranged at least to some extent on a common supporting component, and the driver-controlled lift truck having an operating arrangement integrated into a cover of a battery compartment and having various operating elements and signal generators assigned to the operating elements, which are likewise arranged at least to some extent on a common supporting component, **characterized in that** the steering bar of the pedestrian-controlled lift truck and the operating arrangement of the driver-controlled lift truck are equipped with the same supporting components.

9. Method according to Claim 8, **characterized in that** the supporting components are formed by electric circuit boards (7).

10. Method according to Claim 8 or 9, **characterized in that** the steering bar of the pedestrian-controlled lift truck and the operating arrangement of the driver-controlled lift truck are equipped with the same signal generators.

## Revendications

1. Flotte de chariots de manutention comprenant un chariot élévateur accompagné et un chariot élévateur autotracté, de préférence un chariot élévateur à siège de conducteur ou à poste de conducteur, le chariot élévateur accompagné présentant un timon de direction avec différents éléments de commande et des générateurs de signaux associés aux éléments de commande, lesquels sont au moins en partie disposés sur un composant porteur commun, et le chariot élévateur autotracté présentant un arrangement de commande intégré dans un couvercle d'un compartiment de batterie et comprenant différents éléments de commande et des générateurs de signaux associés aux éléments de commande, lesquels sont eux aussi au moins en partie disposés sur un composant porteur commun, **caractérisée en ce que** le timon de direction du chariot élévateur accompagné et l'arrangement de commande du chariot élévateur autotracté présentent les mêmes composants porteurs.

2. Flotte de chariots de manutention selon la revendication 1, **caractérisée en ce que** les composants porteurs sont formés par des platines électriques (7).

3. Flotte de chariots de manutention selon la revendication 1 ou 2, **caractérisée en ce que** le timon de direction du chariot élévateur accompagné et l'arrangement de commande du chariot élévateur autotracté présentent les mêmes générateurs de signaux.

4. Flotte de chariots de manutention selon l'une des revendications 1 à 3, **caractérisée en ce que** le couvercle du compartiment de batterie présente une poignée (13).

5. Flotte de chariots de manutention selon l'une des revendications 1 à 4, **caractérisée en ce que** le couvercle présente une surface d'appui (12) pour un bras de l'opérateur.

6. Flotte de chariots de manutention selon la revendication 5, **caractérisée en ce qu'**au moins un élément de commande est disposé surélevé par rapport à la surface d'appui (12).

7. Flotte de chariots de manutention selon l'une des revendications 4 à 6, **caractérisée en ce qu'**au moins un élément de commande est accessible avec les doigts d'une main qui entoure la poignée (13).

8. Procédé de production d'une flotte de chariots de manutention comprenant un chariot élévateur accompagné et un chariot élévateur autotracté, de préférence un chariot élévateur à siège de conducteur ou à poste de conducteur, le chariot élévateur accompagné présentant un timon de direction avec différents éléments de commande et des générateurs de signaux associés aux éléments de commande, lesquels sont au moins en partie disposés sur un composant porteur commun, et le chariot élévateur autotracté présentant un arrangement de commande intégré dans un couvercle d'un compartiment de batterie et comprenant différents éléments de commande et des générateurs de signaux associés aux éléments de commande, lesquels sont eux aussi au moins en partie disposés sur un composant porteur commun, **caractérisée en ce que** le timon de direction du chariot élévateur accompagné et l'arrangement de commande du chariot élévateur autotracté présentent les mêmes composants porteurs.

9. Procédé selon la revendication 8, **caractérisé en ce que** les composants porteurs sont formés par des platines électriques (7).

10. Procédé selon la revendication 8 ou 9, **caractérisé en ce que** le timon de direction du chariot élévateur accompagné et l'arrangement de commande du chariot élévateur autotracté sont équipés des mêmes générateurs de signaux.
